**Europäisches Patentamt**

**European Patent Office**

**Office européen des brevets**

(19)

(11) **EP 0 845 656 B1**

(12) **FASCICULE DE BREVET EUROPEEN**

(45) Date de publication et mention
de la délivrance du brevet:
**02.07.2003 Bulletin 2003/27**

(51) Int Cl.⁷: **G01B 11/14**, G01B 11/24

(21) Numéro de dépôt: **97402897.9**

(22) Date de dépôt: **02.12.1997**

(54) **Système de mesure de jeux et d'affleurements entre des pièces en vis-à-vis**

System zum Messen des Spiels und der Koplanarität zweier nebeneinander liegender Objekte

System to measure the play and coplanarity between two objects facing each other

(84) Etats contractants désignés:
**BE DE ES GB IT SE**

(30) Priorité: **02.12.1996 FR 9614764**

(43) Date de publication de la demande:
**03.06.1998 Bulletin 1998/23**

(73) Titulaires:
- **ESIC S.N**
  **78190 Trappes (FR)**
- **Coord 3 S.p.A.**
  **10050 Bruzolo di Suza (TO) (IT)**
- **ABB Barras Provence**
  **04100 Manosque (FR)**

(72) Inventeurs:
- **Dalancon, Thomas**
  **78280 Guyancourt (FR)**

- **Marta, Sandro**
  **10091 Alpignano (TO) (FR)**
- **Mutius, Bernard**
  **13005 Marseille (FR)**
- **Lebrat, Laurent**
  **04100 Manosque (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
EP-A- 0 132 200     US-A- 5 129 010
US-A- 5 416 590

EP 0 845 656 B1

## Description

La présente invention concerne la mesure dimensionnelle et, plus particulièrement, elle concerne un système de mesure de jeux et d'affleurements entre des surfaces en vis-à-vis.

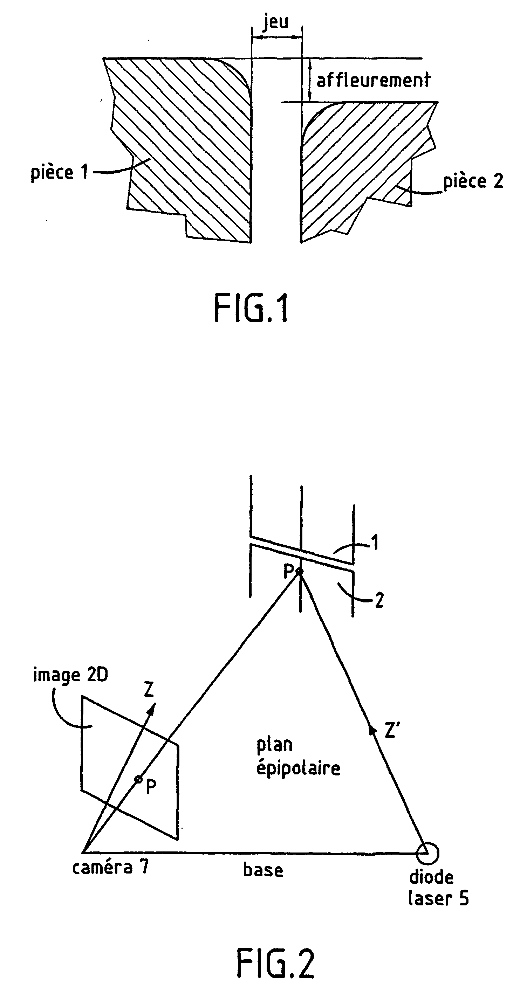

Dans le domaine industriel il est souvent nécessaire de mesurer les écarts qui existent entre deux surfaces en vis-à-vis dans le but, par exemple, de s'assurer que ceux-ci se situent bien autour de valeurs prédéfinies et de déterminer comment ces valeurs évoluent dans le temps. Le jeu qui existe entre deux surfaces est souvent significatif du point de vue du fonctionnement mécanique de l'ensemble. L'affleurement est étroitement lié au jeu dans certaines configurations complexes de contact entre pièces, mais il représente plutôt une notion d'esthétisme et d'aérodynamisme. La figure 1 montre un schéma indiquant le jeu et l'affleurement entre deux pièces en vis-à-vis.

Le procédé classique de mesure de jeux et d'affleurements, en particulier dans l'industrie automobile ou aéronautique, consiste en l'utilisation de jauges d'écartement ou de cales étalon. L'outil de mesure lui-même est souvent associé à un boîtier comportant des éléments de stockage et de traitement des données collectées, et/ou a été relié à un ordinateur ou une imprimante. Ces systèmes classiques comportent plusieurs inconvénients.

En premier lieu, tout système de mesure par contact comporte le risque d'endommager les surfaces sur lesquelles la mesure est effectuée. En dehors des problèmes de création de rayures sur les surfaces, l'effort exercé sur les surfaces par les becs d'une jauge d'écartement peut amener à une augmentation de l'écart existant entre ces surfaces et ainsi fausser la mesure. Ce dernier problème est d'autant plus grave qu'il s'agit de mesures effectuées sur des tôles fines en porte-à-faux. Par ailleurs, ces systèmes classiques ne permettent pas de satisfaire les critères de résolution et de rapidité de mesure de plus en plus stricts fixés dans le domaine industriel. Enfin, et plus significativement, la qualité des mesures effectuées avec de tels outils est très dépendante du positionnement de l'appareil par rapport aux surfaces sur lesquelles la mesure est effectuée. Ainsi, la répétabilité et la fiabilité des mesures obtenues dépendent beaucoup de l'opérateur.

Plus récemment, des systèmes sans contact ont été proposés pour la mesure de jeux et d'affleurements tels que, par exemple, un système de triangulation optique. (Un exemple d'un système de mesure de jeux et d'affleurements par triangulation optique consiste en le produit connu sous l'appellation AFFLEUREDIX, fabriqué par la société EDIXIA). La construction générale d'un tel système est illustrée sur la figure 2.

Le principe de base du système de mesure de jeux et d'affleurement par triangulation optique montré sur la figure 2 est dérivé de la photogrammétrie. Un faisceau de lumière laser lamellaire est généré par une source (par exemple une diode laser 5) en association avec des éléments optiques. Ce plan lumineux lamellaire est projeté sur les surfaces 1, 2 objets de la mesure de manière à illuminer une région comportant l'interface entre ces surfaces et créer ainsi une ligne de surbrillance perpendiculaire, si possible, à l'axe moyen du jeu. La ligne de surbrillance se trouve dans le champ de vision d'une caméra vidéo 7 comportant un capteur d'image matriciel (de type CCD). Le capteur matriciel de la caméra est impressionné par les rayons provenant de la ligne de surbrillance.

La géométrie interne de la caméra 7 étant connue, grâce à une étape de calibration préalable, il est possible d'associer à chaque pixel du capteur une droite dans l'espace. On peut ainsi associer à chaque point de l'image de la ligne de surbrillance une droite dans l'espace. L'intersection de cette droite avec un des rayons composant le plan lumineux forme un triangle situé dans un plan (dit "plan épipolaire"). L'étalonnage préalable permet aussi de déterminer la séparation entre la caméra 7 et la source de lumière 5 (la base) et l'angle entre cette base et chaque point sur la ligne de surbrillance. On peut ainsi, pour chaque point de la ligne de surbrillance, résoudre le triangle correspondant situé dans le plan épipolaire pour déterminer la position de ce point en trois dimensions.

Quand les positions tridimensionnelles des points sur la ligne de surbrillance ont été déterminées, on détermine les positions des bords des deux surfaces en vis-à-vis et on calcule ensuite la séparation entre ces bords (le jeu entre les surfaces). Le calcul d'affleurement passe par une détermination de l'emplacement de la surface principale de chacune des pièces en vis-à-vis et un calcul de la différence de hauteur entre celles-ci.

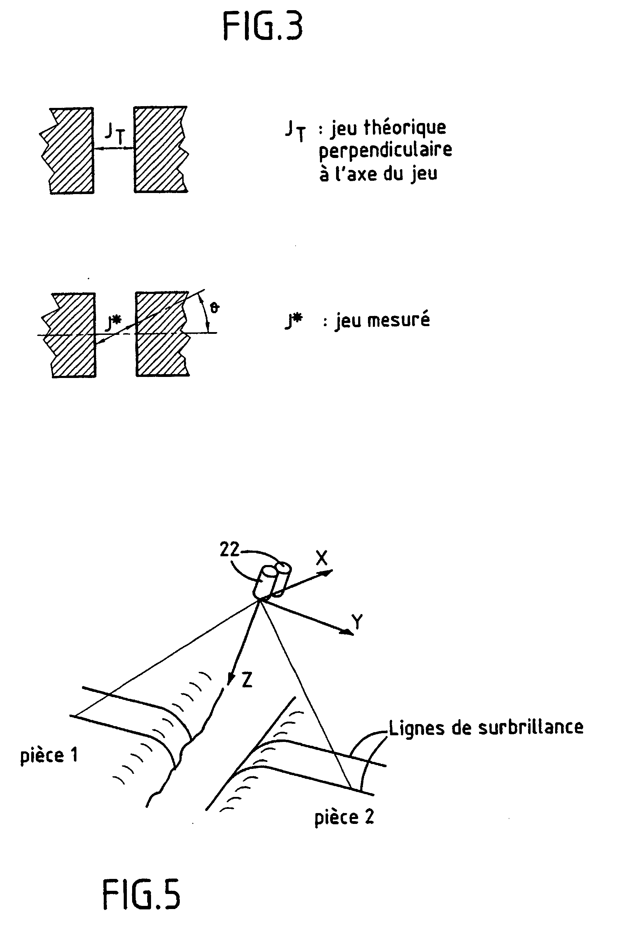

Les systèmes de triangulation optique connus permettent d'effectuer des mesures rapides de jeux et d'affleurements sans risque d'abîmer les surfaces. Cependant, la qualité de la mesure effectuée dépend toujours de l'orientation de l'appareil de mesure. On va maintenant expliquer ce problème en se référant à la figure 3.

Sur la figure 3 on voit le cas de projection d'une ligne de surbrillance qui n'est pas perpendiculaire à l'axe moyen du jeu. Dans un tel cas, la valeur mesurée, J*, ne représentera pas le véritable jeu existant entre les surfaces 1 et 2. La vraie valeur de jeu, J, est égale à $J^*\cos\theta$, où $\theta$ représente la rotation de l'appareil de mesure par rapport à l'orientation qui aurait donné une ligne de surbrillance perpendiculaire à l'axe moyen du jeu. Le même problème se pose vis-à-vis de l'affleurement lors de rotations de l'appareil dans une autre direction.

La répétabilité des mesures effectuées dans les systèmes connus est aussi influencée par le choix de points et de lignes de référence entre lesquels les écarts sont déterminés, surtout en cas de caractérisation de surfaces galbées.

Tout algorithme de calcul de jeu et d'affleurement doit comporter une définition des points et des lignes (ou plans) de référence entre lesquels les écarts seront mesurés. La qualité et la répétabilité des mesures de jeu et d'affleurement dépendent d'un choix judicieux des définitions pour ces points et lignes de référence. Les définitions doivent correspondre à des emplacements stables sur des échantillons différents des pièces visées. Elles doivent aussi faciliter l'élaboration d'une construction géométrique permettant d'extraire une valeur de jeu ou d'affleurement qui corresponde à l'écart physique normalement connu sous ce terme.

L'importance de ce choix de points, de lignes et de plans de référence est d'autant plus grande que le style actuel de carrosseries évolue vers des formes de plus en plus galbées qui se rapprochent plus des surfaces gauches que de l'association de plans et de cylindres. Les définitions des paramètres de référence utilisées dans les systèmes connus ne sont pas bien adaptées à la caractérisation de pièces de cette forme.

Ici, l'expression "surface gauche" signifie toute surface géométrique ne pouvant être strictement décrite par une équation.

Le brevet américain US-A-5 416 590 décrit un appareil de mesure de jeux et d'affleurements entre deux pièces en vis-à-vis, utilisant les principes de triangulation optique afin de déterminer les positions tridimensionnelles de points situés sur deux lignes de surbrillance créées par deux plans lumineux convergents. Chacune des deux lignes de surbrillance illumine l'interface entre les deux pièces et s'étend, de préférence, perpendiculairement à l'axe du jeu (cette orientation représente la situation idéale). Les mesures effectuées par cet appareil seraient cependant fiables même en cas de rotation de l'appareil de 10° par rapport à l'orientation idéale. Les calculs de jeu et d'affleurement comportent une étape de définition de lignes et de plans de référence pour chacune des pièces en vis-à-vis. Pour chaque pièce, ces paramètres de référence sont calculés à partir de données de positionnement relatives aux deux lignes de surbrillance (plus précisément, à partir de données concernant les parties des deux lignes qui se trouvent sur cette pièce). Le jeu et l'affleurement sont calculés ensuite par analyse de l'écart entre les paramètres de référence déterminés pour chaque pièce.

Du fait que les plans lumineux utilisés dans le système de US-A-5 416 590 convergent, la séparation entre les deux lignes de surbrillance dépend de la distance entre l'appareil de mesure et les surfaces sur lesquelles la mesure est pratiquée. Ceci impose des contraintes pour l'opérateur en termes de positionnement de l'appareil, puisqu'il doit s'assurer que les deux lignes de surbrillance se trouvent dans le champ de vision de la caméra et qu'elles sont espacées par une distance suffisante pour permettre leur résolution par la caméra. Ce problème est résolu selon US-A-5 416 590 en obligeant l'opérateur à plaquer l'appareil de mesure contre les pièces objets de la mesure. Toutefois, cette solution comporte un risque d'endommagement des pièces. De plus, l'opérateur ne peut pas voir l'endroit précis où la mesure sera effectuée, ce qui rend plus difficile la localisation de l'appareil au bon endroit.

Le fait que les plans lumineux utilisés dans le système de US-A-5 416 590 sont convergents signifie que chacun des plans est incident sur les pièces selon un angle oblique, typiquement de 40° à 45°. Les images générées par l'intersection des plans lumineux avec les pièces ne correspondent donc pas à la forme géométrique des pièces illuminées mais à une distorsion de celle-ci causée par la perspective.

Par ailleurs, dans le système préconisé dans US-A-5 416 590, les données d'image sont soumises à une binarisation avant le calcul des positions tridimensionnelles des points de référence. Cette procédure supprime la possibilité de recourir à une interpollation « subpixel » de la position de la ligne de surbrillance sur l'image. Ceci amène à une perte de résolution. En outre, le calcul de jeu et d'affleurement selon ce système connu passe par la modélisation de chaque pièce selon un plan déterminé en utilisant la méthode des moindres carrés. Cette méthode ne permet pas d'obtenir un résultat fiable (voire d'obtenir de résultat du tout) en cas de mesures effectuées sur des pièces dont la surface est gauche.

La présente invention vise à fournir une méthode et un appareil perfectionné de mesure de jeu et d'affleurement entre deux pièces en vis-à-vis selon lesquels des rotations de l'appareil de mesure peuvent être compensées.

La présente invention vise aussi à fournir une méthode et un appareil perfectionné de mesure de jeux et d'affleurements entre deux pièces en vis-à-vis dans lesquels les algorithmes de calcul sont basés sur des définitions de points et de lignes de référence stables et répétables afin d'améliorer la qualité et la répétabilité des valeurs mesurées, notamment en cas de mesures effectuées sur des pièces dotées de surfaces dont le profil comporte une partie de rayon de courbure important et , à l'extrémité, une partie de rayon de courbure relativement petit, telles que des tôles serties.

La présente invention prévoit un système de mesure de jeu et d'affleurement entre les surfaces de deux pièces en vis-à-vis, chacune des pièces présentant une surface principale et un bord, comprenant :

- une ou des sources lumineuses projetant deux plans lumineux lamellaires sur les pièces de manière à créer deux lignes de surbrillance s'étendant chacune transversalement aux bords des deux pièces,
- une caméra captant l'image de ces deux lignes de surbrillance et
- une unité de traitement de données (30) telle que :
- le profil des surfaces en 3 dimensions est calculé le long de chaque ligne de surbrillance,
- des valeurs brutes du jeu et de l'affleurement entre les surfaces des deux pièces sont calculées à partir d'au moins un de ces deux profils, et

caractérisé en ce que les deux plans lamellaires projetés sont parallèles, et les valeurs brutes de jeu et /ou d'affleurement sont corrigées, afin de compenser des rotations éventuelles de l'appareil, en effectuant un calcul utilisant ladite valeur brute, la séparation entre les deux plans lumineux, et la différence entre la position d'un point de référence d'un des deux profils et la position du point de référence correspondant de l'autre.

L'utilisation de deux plans de projection parallèles permet, en plus de la détermination de valeurs brutes de jeu et d'affleurement, une compensation des éventuelles rotations de l'appareil de mesure. Ainsi, la présente invention permet d'obtenir des mesures précises de jeu et d'affleurement entre deux surfaces tout en acceptant une incertitude de positionnement de l'outil de mesure, ce qui garantit une bonne répétabilité.

Grâce aux algorithmes mis en oeuvre selon l'invention, des valeurs précises de jeu et d'affleurement sont évaluées rapidement avec une résolution et une répétabilité de mesure accrues par rapport aux systèmes connus.

Dans un mode de réalisation préféré de l'invention le calcul de jeu et d'affleurement entre deux surfaces passe par la sélection de points et de lignes de référence particulières dans chacun des deux profils. Grâce à ces définitions des paramètres de référence, les valeurs de jeu et d'affleurement obtenues selon l'invention possèdent une très bonne répétabilité et correspondent étroitement aux spéficications théoriques, même dans le cas de caractérisation de pièces serties.

Dans un mode de réalisation préféré de l'invention, la ou les sources lumineuses utilisées pour générer les plans lumineux sont constituées de sources monochromatiques, notamment des diodes lasers, et la lumière captée par la caméra est filtrée. Ceci permet d'éliminer les interférences entre la lumière provenant des lignes de surbrillance, qui doit être captée par la caméra, et la lumière provenant d'autres sources présentes dans l'environnement. Cette dernière caractéristique est très avantageuse puisqu'elle permet de prendre des mesures lorsque l'appareil de mesure est espacé des pièces en vis-à-vis de telle manière que l'opérateur puisse voir l'endroit précis où les plans lumineux illuminent ces pièces.

D'autres avantages et caractéristiques de la présente invention apparaîtront à la lecture de la description suivante de modes de réalisation préférés, donnés à titre d'exemples, en association avec les dessins annexés dans lesquels :

la figure 1 est un schéma illustrant la définition des paramètres de "jeu" et "d'affleurement" entre deux pièces en vis-à-vis ;
la figure 2 est un schéma montrant les éléments principaux d'un système de mesure de jeu et d'affleurement par triangulation optique classique ;

la figure 3 est un schéma montrant comment la valeur de jeu mesuré dépend de l'orientation de l'appareil de mesure ;
la figure 4 est un schéma indiquant les composants principaux d'un système de mesure selon un mode de réalisation préféré de la présente invention ;
la figure 5 illustre le référentiel du dispositif ;
les figures 6a) à 6c) illustrent les plans lumineux incidents sur des pièces à caractériser, selon un positionnement idéal de l'appareil de mesure, la figure 6a) montrant une vue dans la direction de l'axe y, la figure 6b) montrant une vue dans la direction de l'axe x, et la figure 6c) montrant une vue dans la direction de l'axe z ;
les figures 7a) à 7c) illustrent les plans lumineux incidents sur des pièces à caractériser lorsque l'orientation de l'appareil présente une rotation par rapport à la position idéale : la figure 7a) illustrant le cas de rotation autour de l'axe x, la figure 7b) illustrant le cas de rotation autour de l'axe y, et la figure 7c) illustrant le cas de rotation autour de l'axe z ;
les figures 8a) et 8b) montrent les points et lignes de référence définis selon le mode de réalisation préféré de la présente invention ;
la figure 9 est un schéma indiquant comment une valeur de jeu est calculée selon le mode de réalisation préféré de la présente invention ;
la figure 10 est un schéma indiquant comment une valeur d'affleurement est calculée selon le mode de réalisation préféré de la présente invention ;
la figure 11 est un schéma illustrant un autre procédé selon l'invention permettant de déterminer des valeurs de jeu et d'affleurement ; et
la figure 12 est un schéma illustrant un autre procédé selon l'invention permettant de déterminer l'emplacement du premier point de référence I.

Avant de décrire les algorithmes et les calculs mis en oeuvres dans la présente invention, on va brièvement décrire la construction et l'agencement des éléments d'un système selon un premier mode de réalisation de l'invention.

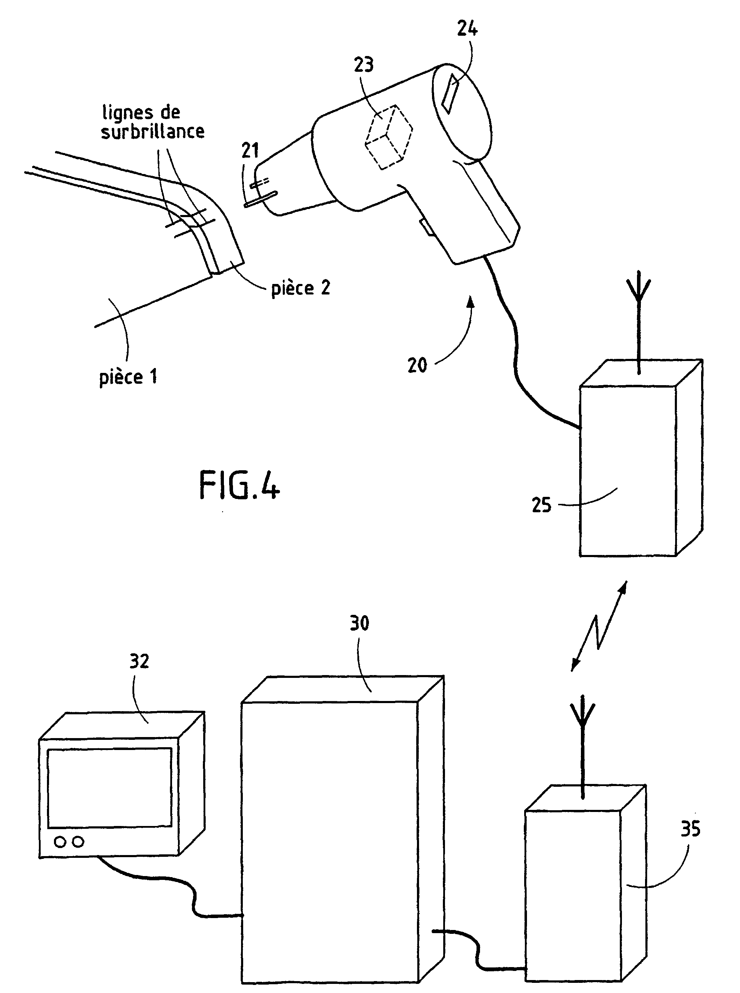

La figure 4 est un schéma indiquant les éléments principaux du système de mesure de jeux et d'affleurements selon un mode de réalisation préféré de la présente invention. Le système consiste en un dispositif de prise de vue 20 en liaison avec une unité de traitement et de stockage de données 30. Dans le présent mode de réalisation la liaison entre le dispositif de prise de vue 20 et l'unité de traitement de données 30 se fait par transmission hertzienne. De préférence, l'unité de traitement de données 30 possède plusieurs canaux de communication, par exemple cinq canaux de communication, afin de pouvoir recevoir des données en provenance de cinq dispositifs de prise de vue 20.

Cette méthode de communication hertzienne confère à l'opérateur une plus grande liberté de déplacement que la méthode classique de liaison par fil. Dans le cadre d'un contrôle de qualité effectué dans l'industrie automobile cette méthode facilite la prise de mesures dans un parc de véhicules. Cependant, l'invention peut aussi être mise en oeuvre dans des systèmes où le dispositif de prise de vue 20 et l'unité de traitement de données 30 communiquent par voie filaire.

Le dispositif de prise de vue 20 se présente sous la forme d'un pistolet muni de deux piges rigides 21 équipées d'appuis mous à l'extrémité. Lors du fonctionnement, l'opérateur centre le pistolet sur l'axe moyen du jeu à mesurer en mettant les piges en léger contact avec les surfaces situées de part et d'autre du jeu. Ceci assure un maintien stable du dispositif 20 pendant les acquisitions de données. De plus, l'espace qui existe entre le pistolet et les surfaces sur lesquelles la mesure sera effectuée permet à l'opérateur de voir avec précision l'endroit où se forment les deux lignes de surbrillance utilisées pendant la prise de mesure. Il est donc facile pour l'opérateur de garantir que la mesure est réalisée au bon endroit, ce qui est essentiel lorsque les mesures sont effectuées dans le contexte du contrôle qualité d'une chaîne de production.

Le pistolet peut être doté d'un ou plusieurs repères destinés à faciliter l'alignement du pistolet avec l'interface entre les surfaces à caractériser. Cependant, pour des raisons expliquées ci-dessous, on dispose d'une latitude de positionnement du dispositif compensée par les calculs effectués par l'unité de traitement 30.

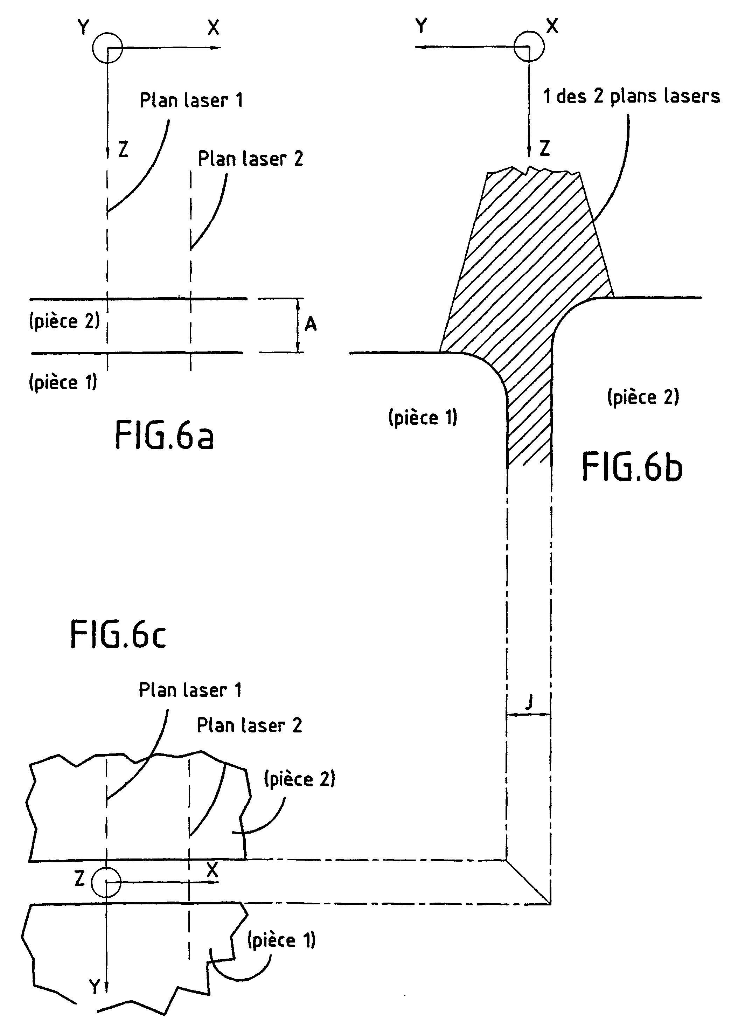

Le dispositif de prise de vue 20 comporte deux sources lumineuses 22 (représentées sur la figure 5) avec des éléments optiques associés adaptés pour produire deux plans lumineux lamellaires sensiblement parallèles émis depuis le canon du pistolet. Dans un mode de réalisation préférentiel ces sources lumineuses sont des diodes lasers. On retrouve de telles diodes laser et de telles optiques de génération de plans couramment chez les revendeurs de lasers. De façon alternative, on peut aussi utiliser une seule source lumineuse partagée optiquement en deux canons.

Il est préféré, selon la présente invention, que la source lumineuse ou les sources lumineuses soient monochromatiques (ce qui est le cas, par exemple, lorsque des diodes lasers sont employées). Ceci permet de différencier la lumière provenant de ces sources lumineuses de la lumière, de longueur d'onde différente, provenant d'autres sources lumineuses présentes dans l'environnement.

Une caméra 23 est disposée dans le pistolet de telle sorte que les plans lumineux émis par les diodes laser se trouvent dans le champ de vision de la caméra. Le capteur d'image de la caméra 23 peut être, par exemple, un dispositif à couplage de charge (dispositif CCD) comportant des pixels disposés en matrice ou tout autre moyen d'acquérir électroniquement des images. De préférence, le pistolet comporte un filtre (non illustré) agencé de façon à filtrer la lumière incident sur la caméra. Ce filtre est centré sur la longueur d'onde des sources lumineuses monochromatiques employées dans le pistolet.

Le pistolet 20 est doté d'un afficheur 24 sur lequel s'affichent des informations utiles à l'opérateur, par exemple, le numéro de référence du point de mesure actuel, les valeurs de jeu et d'affleurement ou les écarts par rapport aux valeurs théoriques, et les mesures hors tolérances. Cet afficheur peut être, par exemple, un afficheur à cristaux liquides (LCD).

Le dispositif de prise de vue selon le présent mode de réalisation emploie des composants et des procédés qui sont déjà connus en soi et qui ne seront, donc, pas décrits plus en détail ici. Par exemple, l'étalonnage du dispositif de prise de vue 20 afin de déterminer la séparation entre chaque source laser et la caméra, et les définitions algébriques des droites respectives reliant chaque pixel de la caméra CCD 23 avec des points de chaque plan lumineux, etc., peuvent également se faire selon des procédés connus employés dans les systèmes de triangulation optique classique.

La gamme de mesure peut être programmée d'avance afin de définir la série de points de mesure pour lesquels les données seront acquises, ainsi que les valeurs théoriques et les tolérances associées. Dans le présent mode de réalisation, le dispositif de prise de mesure 20 comporte au moins une gâchette pour le déclenchement manuel de la mesure par l'opérateur. Il peut aussi comporter plusieurs boutons poussoirs afin de permettre à l'opérateur de fournir des indications diverses au système comme, par exemple, le fait qu'il passe au prochain point de mesure, qu'une mesure sera répétée, qu'il change le mode de fonctionnement de l'appareil, etc..

Dans le présent mode de réalisation, le dispositif de prise de vue est relié à un module d'émission/réception 25 portable, par exemple, à la ceinture de l'opérateur. Le module d'émission/réception 25 communique, par liaison radio du type RS232 bidirectionnelle, avec un module d'émission/réception 35 relié à l'unité de traitement de données. Cette liaison permet la gestion à distance de l'afficheur 24, et des réglages de la caméra 23 et des diodes laser 22 du dispositif de prise de vue 20. Les données vidéo sont émises par une liaison hertzienne supplémentaire depuis le module d'émission/réception 25 en direction de l'unité de traitement de données 30.

L'unité de traitement de données est, de préférence, un micro-ordinateur de type PC doté de cartes de numérisation et de traitement d'images et d'un logiciel permettant de programmer les gammes de mesures et d'archiver les données de contrôle et de mesure dans un format lisible par tout éditeur de texte. De préférence, l'unité de traitement de données est reliée à une unité d'affichage 32. Lors de la mesure, les valeurs obtenues sont affichées à la fois sur l'écran de l'unité d'affichage et sur l'afficheur 24 du dispositif de prise de vue 20. Les étapes initiales du traitement des données d'image pour générer un profil en 3 dimensions pour chacune des lignes de surbrillance reprennent des procédés déjà connus à partir des systèmes de triangulation optique classiques. Le traitement des données de profil selon la présente invention est décrit plus en détail ci-dessous.

Le fait que la détermination des points de référence des constructions géométriques soit basée non pas sur l'exploitation en 2 dimensions des images mais sur un profil en 3 dimensions calculé par triangulation optique permet d'obtenir une précision très élevée dans le calcul de jeu et d'affleurement. En effet, le traitement bi-dimensionnel des images des projections de plans lumineux induit des incertitudes sur la position des points de référence qui sont liées à la variation du facteur d'échelle (taille image sur taille objet). Ce mode de détermination des points de référence oblige à assurer au minimum un éloignement constant de l'instrument de mesure par rapport aux surfaces à caractériser ; ce qui n'est pas toujours réalisable en pratique compte tenu de la morphologie des pièces.

La précision de l'appareil objet de la présente invention est optimisée puisqu'elle est indépendante de la position du pistolet de mesure par rapport à l'échantillon mesuré aussi bien en distance qu'en position angulaire tant que ce dernier reste dans le volume de travail optique du pistolet.

Plusieurs modifications du système selon ce mode de réalisation sont envisageables sans, toutefois, sortir du cadre de la présente invention. Par exemple, le dispositif de prise de vue utilisé pour générer les données d'image représentatives de l'interface entre les pièces en vis-à-vis peut employer une caméra supplémentaire afin de donner accès à des points qui ne sont pas visibles par la première caméra.

On va maintenant décrire les étapes du calcul de jeux et d'affleurements selon la présente invention entre des pièces serties en vis-à-vis. Des pièces de cette forme sont souvent utilisées dans le cadre de l'industrie automobile ou aéronautique.

Les algorithmes de la présente invention comportent deux grandes étapes : un calcul des valeurs brutes de jeu et d'affleurement, et un calcul de correction afin de compenser ces valeurs pour des rotations éventuelles de l'appareil de mesure par rapport à l'orientation idéale. Pour aider la compréhension du lecteur, le calcul de correction sera décrit en premier en supposant l'existence de valeurs brutes de jeu et d'affleurement. On va ensuite expliquer comment les valeurs initiales de jeu et l'affleurement sont évaluées selon le mode de réalisation préféré de la présente invention.

Le système de référence relatif au capteur optique du système selon le présent mode de réalisation préféré de l'invention est indiqué sur la figure 5. L'origine est le centre de projection d'une des deux sources laser, l'axe x est perpendiculaire au plan de surbrillance, l'axe y est perpendiculaire à l'axe de la source laser et contenu dans le premier plan laser, et l'axe z est coaxial avec l'axe de la source laser orienté dans le sens de la projection de surbrillance.

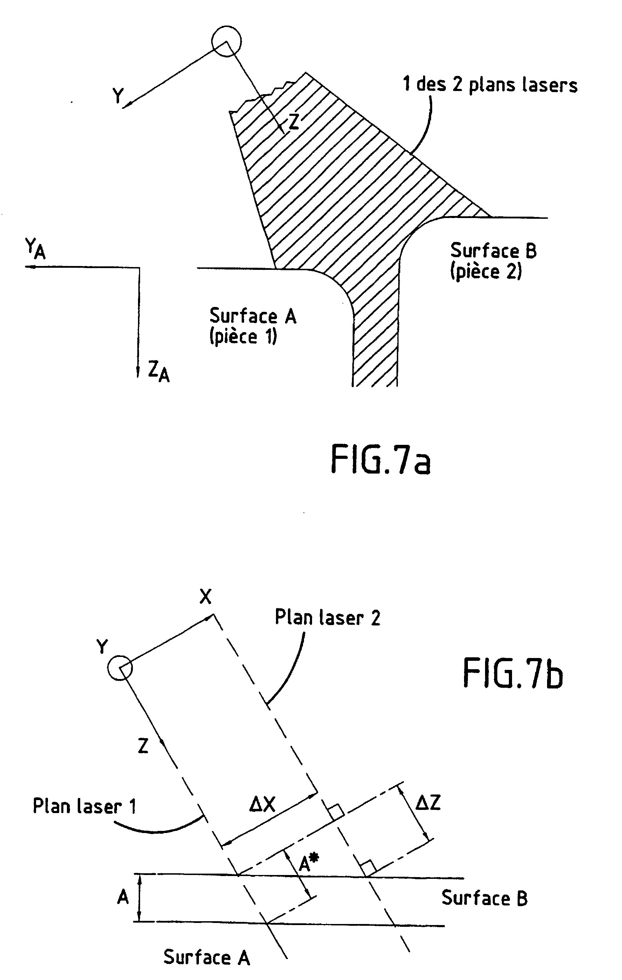

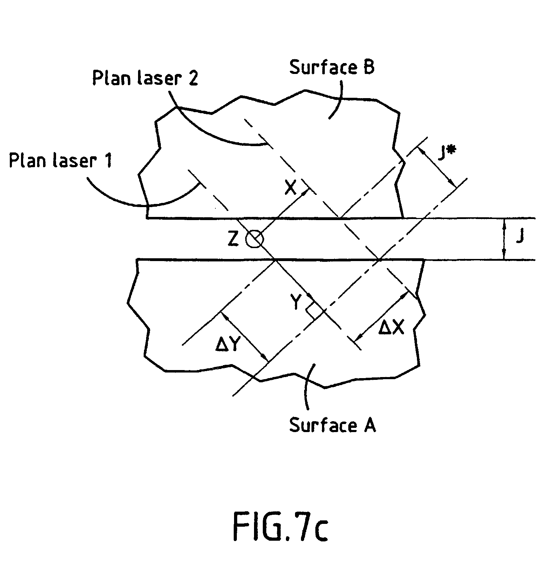

Les figures 6a) à 6c) illustrent les plans lumineux incidents sur l'interface de deux pièces 1, 2 à caractériser, selon un positionnement idéal de l'appareil de mesure. La figure 6a) montre une vue dans le plan x-z. La figure 6b) montre une vue dans le plan y-z. La figure 6c) montre une vue dans le plan x-y. Pour une meilleure compréhension des grandeurs mesurées, ces schémas (ainsi que ceux de la figure 7) montrent des pièces dont les profils contiennent des parties rectilignes.

Les figures 7a), 7b) et 7c) illustrent les plans lumineux incidents sur l'interface des deux pièces 1, 2, dans le cas d'une rotation de l'appareil de mesure par rapport au positionnement idéal autour des axes x, y et z, respectivement.

En cas de rotation de l'appareil de mesure autour de l'axe x, il n'y a pas d'incidence sur les valeurs de jeu et d'affleurement évaluées dans la mesure où ces valeurs sont calculées à partir de points d'image générés par un seul des plans de lumière projetés (c'est-à-dire que le calcul de jeu et d'affleurement utilise des points se trouvant tous dans un même plan parallèle au plan y-z).

En cas de rotation de l'appareil de mesure autour de l'axe y ou de l'axe z, les valeurs d'affleurement et de jeu, respectivement, sont modifiées. Selon la présente invention ce problème peut être résolu en effectuant une correction des valeurs de jeu et d'affleurement calculées initialement. Afin de pouvoir effectuer chacune de ces corrections, on désigne un point de référence sur une des pièces à caractériser, on détermine les coordonnées de ce point de référence dans chacun des demi-profils correspondant respectivement à l'image de cette pièce dans les deux lignes de surbrillance et on utilise la différence de positionnement apparent de ce point de référence afin d'effectuer la correction.

En cas de rotation de l'appareil de mesure autour de l'axe y, le jeu est invariant. Cependant, l'affleurement apparent ne correspond plus au vrai affleurement. Selon la présente invention ce problème peut être résolu en effectuant une correction de la valeur initiale d'affleurement calculée, selon l'équation suivante :

$$A = A^* \sqrt{\frac{\Delta x^2}{\Delta x^2 + \Delta z^2}}$$

où A représente la valeur corrigée d'affleurement, A* représente la valeur initiale d'affleurement, $\Delta$x représente la séparation étalonnée entre les plans lumineux et $\Delta$z représente la différence de position, dans la direction de projection (z), des points de référence des deux demi-profils.

En cas de rotation de l'appareil de mesure autour de l'axe z, l'affleurement est invariant. Cependant, le jeu apparent ne correspond plus au vrai jeu. Selon la présente invention ce problème peut être résolu en effectuant une correction de la valeur initiale de jeu calculée, selon l'équation suivante :

$$J = J^* \sqrt{\frac{\Delta x^2}{\Delta x^2 + \Delta y^2}}$$

où J représente la valeur corrigée de jeu, J* représente la valeur initiale de jeu, $\Delta x$ représente la séparation étalonnée entre les plans lumineux et $\Delta y$ représente la différence de position, dans la direction (y) orthogonale à la fois à la direction de projection (z) et à la direction (x) perpendiculaire au plan de surbrillance, des points de référence correspondants des deux demi-profils.

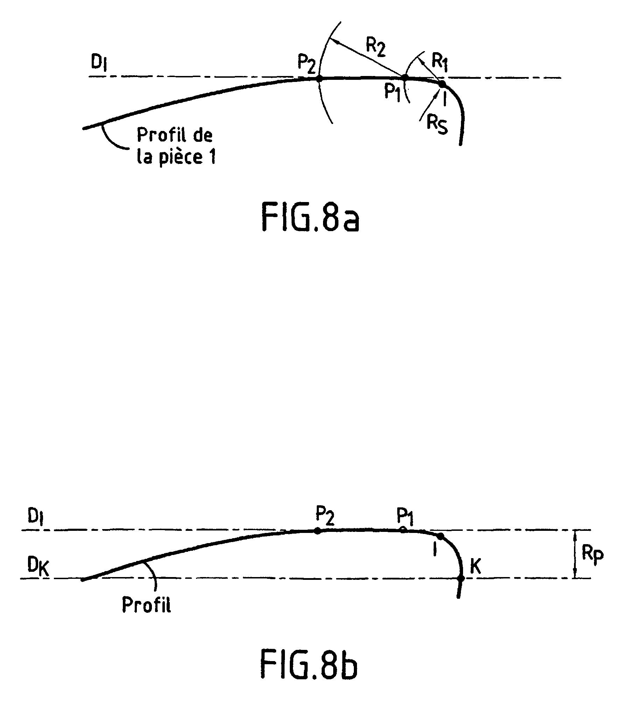

En se référant aux figures 8 à 10 on va maintenant expliquer la méthode préférée de calcul de valeurs initiales de jeu et d'affleurement selon la présente invention.

On traite d'abord les données générées à partir d'une des lignes de surbrillance afin de déterminer des points et des lignes de référence vis-à-vis de chacune des deux pièces, respectivement. Ensuite on évalue les écarts entre ces points et lignes de référence afin d'arriver à des valeurs initiales de jeu et d'affleurement. Pour des raisons expliquées ci-dessous, de préférence on traite ensuite de la même façon les données générées à partir de l'autre ligne de surbrillance afin de générer une deuxième paire de valeurs de jeu et d'affleurement.

La désignation de points et de lignes de référence sur le profil d'une des pièces en vis-à-vis sera maintenant décrit à l'aide de la figure 8. Le même procédé est utilisé afin de désigner des points et des lignes correspondants sur le profil de l'autre des pièces.

L'exemple de la figure 8 concerne des pièces en vis-à-vis qui sont dotées toutes les deux de surfaces serties. Contrairement à la théorie simple qui veut que le rayon de courbure reste constant au niveau du serti pour de telles pièces, les présents inventeurs se sont rendus compte du fait que le rayon de courbure change à cet endroit comme si la courbe concernée était en quelque sorte écrasée. Le procédé suivant pour désigner les points et les lignes de référence est optimisé pour des pièces serties.

Tout d'abord on désigne un premier point de référence invariant, I, en utilisant une particularité des courbes représentatives de tôles serties qui consiste en le fait qu'elles présentent toujours une zone où il y a une variation rapide du rayon de courbure (voir sur la figure 8 a)). En partant de l'extrémité de la courbe (présentant la courbure la plus faible) et en analysant la valeur du rayon de courbure glissant on détermine sur la courbe la position où ce rayon passe en dessous d'une valeur seuil $R_S$. Cette dernière position identifie le point I.

Le choix de la valeur de seuil $R_S$ se fait suite à une analyse statistique de la forme des échantillons des pièces sur lesquelles la mesure sera effectuée. Si sa valeur est trop importante, le bruit de mesure va entraîner une mauvaise répétabilité de la position du point I. Si sa valeur est trop faible, il est possible qu'on ne puisse pas détecter ce changement de courbure. En pratique on a trouvé que, dans le cas de tôles serties, la valeur de seuil $R_S$ convenable est souvent liée à l'épaisseur des tôles. Par exemple, une valeur de seuil $R_S$ de 3 mm convient dans le cas de tôles serties d'une épaisseur de 0,7 mm (de manière plus générale cette valeur convient dans le cas de toute tôle sertie d'épaisseur normale, c'est-à-dire dont l'épaisseur est comprise dans la gamme de 0,67 mm à 0,8 mm).

Une fois ce point de référence I déterminé, un premier point de construction $P_1$ est obtenu à une distance $R_1$ de I puis un deuxième point de construction $P_2$ est obtenu à une distance $R_2$ de $P_1$. On désigne ensuite une droite $D_I$ passant par les points $P_1$ et $P_2$.

Le cas échéant, dans le cas de surfaces légèrement galbées, on peut également définir une première ligne de référence $D_I$ par la meilleure droite passant par les points du profil situé entre les points de construction $P_1$, $P_2$.

Les distances $R_1$ et $R_2$ sont choisies, en fonction des paramètres du système optique ainsi que de la gamme de mesure souhaitée, tout en optimisant la stabilité des points et lignes de référence choisis.

Afin de trouver une droite de référence représentative de la surface principale de la pièce concernée, il faut que le point de référence $P_1$ se trouve sur la partie la plus plate de la surface concernée. Pour que la droite de référence $D_I$ soit stable et répétable, il faut que des données d'image aient été captées relatives au point $P_2$. Alors ce point $P_2$ ne doit pas se trouver en-dehors du champ de vision de la caméra.

On comprendra que le dispositif de prise de vue possède un certain champ de vision et que, si la gamme de jeu qu'on souhaite mesurer va jusqu'à la moitié, les deux tiers, etc. de l'étendue du champ de vision alors, dans le cas du jeu maximum, il ne reste que la moitié, le tiers, etc. de l'étendue du champ de vision pour accommoder les parties des deux pièces capables d'être vues par la caméra. Par exemple, dans le cas où le champ de vision de l'appareil est limité à 25 mm, et le jeu maximum mesurable par le système est de 12 mm, les images captées des pièces en vis-à-vis ne concernent que 13mm des surfaces de celles-ci (6,5 mm de part et d'autre de l'espace entre les pièces). Il s'ensuit que la somme des distances $R_1$ et $R_2$ doit être telle que le point de construction $P_2$ corresponde à un point qui se trouve sur la partie de la pièce concernée qui a été visionnée par la caméra.

On a découvert, aussi, que la distance entre les points de construction $P_1$ et $P_2$ doit être suffisamment longue pour assurer la stabilité de la droite de référence. Dans la pratique, on sélectionne la valeur $R_1$ de façon que le point $P_1$ corresponde à un point se trouvant sur la surface principale de la pièce mais le plus proche possible de la partie plus courbe au bord de la pièce, et on sélectionne la valeur $R_2$ de manière à maximiser la distance entre les points $P_1$ et $P_2$. Selon l'exemple considéré ci-dessus, où une partie de chaque pièce de longueur 6,5 mm est visible, on pourrait choisir $R_1 =$

1 mm et $R_2$ = 5,5 mm. Cependant, un tel choix de valeurs demanderait une précision de positionnement très élevée de l'appareil par rapport à l'axe moyen du jeu. Il est donc préférable, selon cet exemple, de choisir $R_2$ = 4 mm.

Après détermination de la droite de référence $D_l$, un autre point de référence invariant, K, est ensuite déterminé (voir la figure 8 b)). On détermine l'emplacement d'une droite de construction $D_K$ en abaissant une parallèle à la droite de référence $D_l$ vers l'intérieur de la pièce selon une distance $R_p$. L'intersection entre cette droite $D_K$ et le profil de la pièce donne le point K.

Le jeu sera calculé en déterminant l'écart entre les points K des deux pièces en vis-à-vis. Il est donc préférable que ce point K corresponde à un point proche de la courbure maximum dans le cas de pièces pliées à 90° ou plus. On cherche, en effet, à retrouver un point qui correspond à celui qui serait mis en contact avec le bec d'un jauge d'écartement dans un système de mesure par contact. De cette façon, la mesure de jeu effectuée par l'appareil selon l'invention correspond bien à la quantité physique entendue sous ce nom par les carrossiers.

Dans le cas de tôles serties, selon lesquelles une tôle est pliée autour de la périphérie d'une autre de la même épaisseur, ce point K se situe approximativement à une position correspondant à la moitié de trois épaisseurs des tôles concernées. L'épaisseur des tôles utilisées se situe généralement entre 0,67 et 0,8 mm, et au maximum à 1 mm, de façon à pouvoir être emboutie et/ou soudée sans contraintes spécifiques pour les machines classiques, et pour réduire les frais de fabrication. Ainsi, dans le cas de tôles d'épaisseur 0,7 mm, la distance $R_P$ théorique est de 1,05 mm. Pourtant, il est avantageux que ce point K corresponde à un point pour lequel des données d'image ont été captées par la caméra. Il est donc préférable que la distance $R_P$ soit de 0,8 mm dans l'exemple considéré.

Si l'intersection de la droite $D_K$ et la courbe est localisée sur une partie du profil où l'échantillonnage est insuffisant, le prolongement de la courbe est calculé en y ajustant une modélisation par polynôme de degré n à choisir, par exemple, un polynôme du troisième degré. Dans le cas où ce prolongement crée une intersection trop éloignée du plus proche des points échantillonnés, une erreur est signalée.

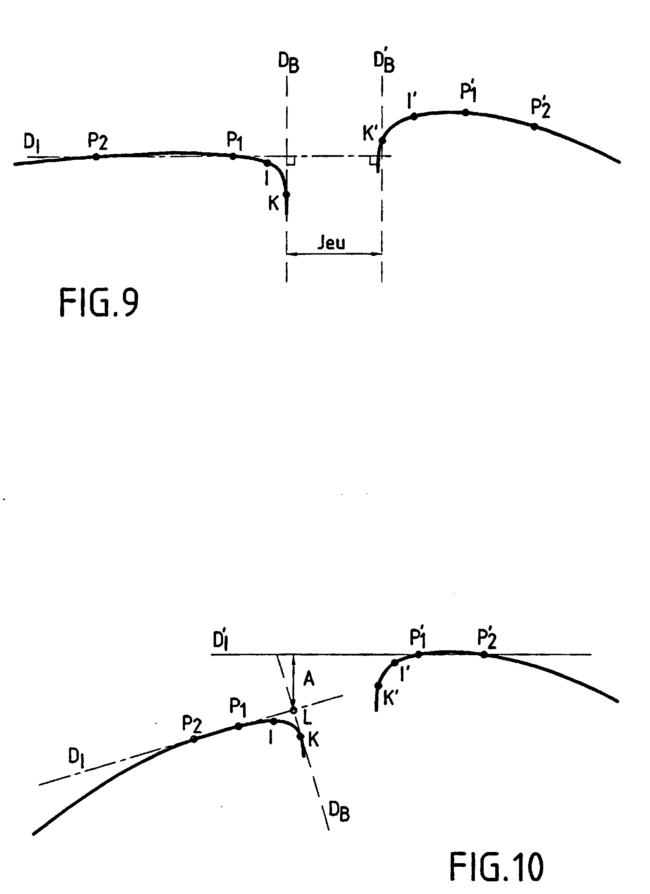

On va maintenant décrire le calcul de la valeur brute de jeu en se référant à la figure 9. La droite $D_l$ d'une des pièces est prise comme référence de position. On évalue alors en tant que jeu la distance entre deux droites $D_B$, $D_B$' passant respectivement par les points K, K' et toutes deux perpendiculaires à la droite $D_l$.

Dans certains cas, la valeur brute de jeu obtenue dépend de la droite, $D_l$ ou $D_l$', qui a été utilisée en tant que référence de position dans le calcul. Il est, donc, préférable d'adopter une pratique constante comme, par exemple, d'utiliser toujours la droite $D_l$ désignée vis-à-vis de la pièce de gauche. Il suffit que la pratique soit constante pour une position de mesure particulière de la gamme de mesure, des pratiques différentes pouvant être adoptées pour des positions de mesure différentes. Afin d'éliminer tout ambiguïté, on peut assurer l'orientation du dispositif de prise de vue 20 dans le bon sens en dotant celui-ci d'un repère visuel. Dans une variante, l'orientation correcte du dispositif de prise de vue 20 peut être assurée en affichant sur l'afficheur 24 une instruction à l'opérateur lui indiquant quelle orientation du dispositif convient à la position de mesure concernée.

On va maintenant décrire le calcul d'affleurement en se référant à la figure 10. On désigne un autre point de référence L correspondant au point d'intersection de la droite $D_B$ et la droite $D_l$ d'une des pièces. La droite $D_l$' de l'autre pièce est prise comme référence de position. On évalue alors en tant qu'affleurement la distance minimum entre le point L et la droite $D_l$' (dans la direction perpendiculaire à la droite $D_l$').

Dans le mode de réalisation préféré de la présente invention, deux paires de valeurs brutes de jeu et d'affleurement sont calculées en traitant les données provenant de chacune des deux lignes de surbrillance, respectivement. Les deux valeurs brutes de jeu sont comparées afin d'évaluer si la différence entre elles dépasse une valeur de seuil. Dans le cas où la différence entre les deux valeurs brutes de jeu est grande ceci peut découler du fait que le jeu existant entre les deux pièces est évolutif. De la même façon, les deux valeurs brutes d'affleurement sont comparées afin d'évaluer si la différence entre elles dépasse une valeur de seuil. Dans le cas où la différence entre les deux valeurs brutes d'affleurement est grande ceci peut correspondre au cas d'un affleurement évolutif. Il est préférable de ne pas acquérir une valeur de jeu ou d'affleurement pour un point de mesure où le paramètre concerné est évolutif.

Dans le mode de réalisation préféré de l'invention, l'unité de traitement de données 30 est adaptée à constater l'existence d'un jeu (ou d'un affleurement) évolutif et d'envoyer au dispositif de prise de vue 20 un message indiquant qu'aucune valeur de jeu (ou d'affleurement) ne devrait être retenue relatif au point de mesure concerné.

Après avoir calculé des valeurs brutes de jeu et d'affleurement celles-ci sont corrigées, selon le procédé déjà décrit, afin de compenser des éventuelles rotations du dispositif de prise de vue par rapport à l'orientation idéale. Dans le mode de réalisation préféré de l'invention, ce calcul de compensation utilise, en tant que point de référence dont le changement de position est évalué, le point de référence I défini ci-dessus.

En utilisant un système de mesure selon le mode de réalisation préféré de la présente invention, les jeux et les affleurements peuvent être mesurés avec une incertitude de mesure globale de 0,1mm (à trois σ, où σ correspond à l'écart quadratique moyen), sur une étendue de mesure de 0 à 10 mm pour les jeux et de 0 à 8 mm pour les affleurements.

L'algorithme décrit ci-dessus permet d'obtenir de très bons résultats quand les mesures sont effectuées sur des surfaces serties en vis-à-vis. Ceci représente environ 80% des cas rencontrés dans l'industrie automobile. Or, d'autres cas existent pour lesquels des variantes du procédé décrit ci-dessus seront mieux adaptés.

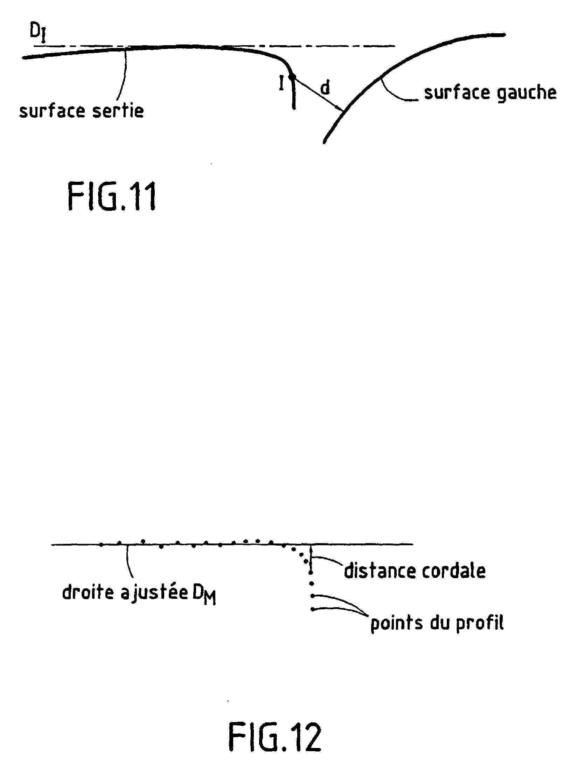

Dans le cas où l'une des surfaces en vis-à-vis est une surface gauche autre qu'une surface sertie, l'analyse statistique nécessaire pour établir la valeur de seuil $R_S$ à utiliser dans la détermination du premier point de référence I est longue et il n'est pas nécessairement rentable de l'effectuer. Un autre procédé selon la présente invention permettant de déterminer des valeurs de jeu et d'affleurement dans le cas d'une surface gauche en vis-à-vis d'une surface courbe (dans cet exemple une surface sertie) sera maintenant décrit à l'aide de la figure 11.

Selon ce procédé alternatif, les premiers point I et droite $D_I$ de référence sont déterminés vis-à-vis de la surface sertie selon la même procédure que dans le procédé décrit précédemment. Ensuite, un calcul est effectué pour déterminer le vecteur *d* le plus court entre le point I de la surface sertie et la surface gauche en vis-à-vis. Les valeurs des composantes de ce vecteur *d* qui sont parallèles et perpendiculaires à la droite de référence $D_I$ de la surface sertie constitueront les valeurs brutes de jeu et d'affleurement, respectivement.

Dans le cas de pièces dotées d'une surface principale sensiblement plane reliée à un bord courbe, il est préférable de déterminer l'emplacement du premier point de référence I en s'écartant du procédé décrit ci-dessus en liaison avec la figure 8. Cette autre variante du procédé de base sera décrite en se référant à la figure 12.

Selon la variante illustrée à la figure 12, la surface principale de la pièce est modélisée par une droite $D_M$, notamment celle qui passe par le maximum de points du profil. La distance cordale, c'est-à-dire la distance entre chaque point et la droite $D_M$, est ensuite analysée en prolongeant cette droite $D_M$ vers le jeu à mesurer. On désigne en tant que premier point de référence, I, le premier point pour lequel la distance cordale est égale ou supérieure à une valeur de seuil $R_C$.

La valeur de seuil $R_C$ est choisie suffisamment grande pour que la rugosité de la surface ne fausse pas le calcul mais suffisamment petite pour représenter l'interface entre les parties plate et courbe de la surface. Dans le cas des tôles utilisées habituellement dans l'industrie automobile, cette valeur $R_C = 0,1$ mm.

Une fois ce premier point de référence I désigné, le procédé de détermination de lignes et de points de référence peut suivre les mêmes étapes que le procédé décrit ci-avant en liaison avec les figures 8 à 10.

Dans les modes de réalisation préférés de la présente invention des valeurs de jeux et d'affleurement sont déterminées en utilisant les points et lignes de référence mentionnés ci-dessus et ensuite les valeurs obtenues sont corrigées afin de compenser d'éventuelles rotations de l'appareil de mesure, cette correction étant possible grâce à la projection de deux plans lumineux parallèles sur les pièces à caractériser. Cette combinaison de moyens permet d'obtenir une performance nettement accrue en termes de résolution et de répétabilité par rapport aux systèmes de l'art antérieur. Cependant, même si les valeurs initiales de jeu et d'affleurement sont déterminées à partir de l'image d'une ligne de surbrillance en utilisant un autre choix de points et de lignes (et/ou de plans) de référence, l'utilisation de deux plans lumineux parallèles afin de créer une deuxième ligne de surbrillance permet d'effectuer une correction de ces valeurs afin d'affranchir l'opérateur du besoin de positionner l'appareil de mesure selon une orientation précise.

Par ailleurs, les points et les lignes de référence utilisés dans le calcul de valeurs brutes de jeu et d'affleurement selon le mode de réalisation préféré de l'invention sont optimisés de telle sorte que leur utilisation, même dans un système utilisant un seul plan lumineux et, donc, dépourvu de compensation pour des éventuelles rotations du dispositif de prise de vue, conduit à une répétabilité de mesure améliorée.

**Revendications**

1. Système de mesure de jeu et d'affleurement entre les surfaces de deux pièces en vis-à-vis, comprenant :

   - une ou des sources lumineuses (22) projetant deux plans lumineux lamellaires sur les pièces de manière à créer deux lignes de surbrillance s'étendant chacune transversalement aux bords des deux pièces,
   - une caméra (23) captant l'image de ces deux lignes de surbrillance, et
   - une unité de traitement de données (30) telle que :
   - le profil des surfaces en 3 dimensions est calculé le long de chaque ligne de surbrillance,
   - des valeurs brutes du jeu (J*) et de l'affleurement (A*) entre les surfaces des deux pièces sont calculées à partir d'au moins un de ces deux profils, et

   **caractérisé en ce que** :

   - les deux plans lamellaires projetés sont parallèles, et
   - - les valeurs brutes de jeu et/ou d'affleurement sont corrigées, afin de compenser des rotations éventuelles de l'appareil, en effectuant un calcul utilisant ladite valeur brute, la séparation ($\Delta x$) entre les deux plans lumineux, et la différence entre la position d'un point de référence d'un des deux profils et la position du point de référence correspondant de l'autre.

**2.** Système de mesure de jeu et d'affleurement entre deux pièces en vis-à-vis selon la revendication 1, **caractérisé en ce que** la valeur brute d'affleurement A* est corrigée selon l'équation suivante :

$$A = A^* \sqrt{\Delta x^2/(\Delta x^2 + \Delta z^2)}$$

où A représente la valeur corrigée d'affleurement, $\Delta x$ représente la séparation entre les plans lumineux et $\Delta z$ représente la différence de position, dans la direction de projection (z), des points de référence correspondants des deux profils.

**3.** Système de mesure de jeu et d'affleurement entre deux pièces en vis-à-vis selon la revendication 1 ou 2, **caractérisé en ce que** la valeur brute de jeu, J*, est corrigée selon l'équation suivante :

$$J = J^* \sqrt{\Delta x^2/(\Delta x^2 + \Delta y^2)}$$

où J représente la valeur corrigée de jeu ; $\Delta x$ représente la séparation entre les plans lumineux et $\Delta y$ représente la différence de position, dans la direction (y) orthogonale à la fois à la direction de projection (z) et à la direction (x) perpendiculaire au plan de surbrillance, des points de référence correspondants des deux profils.

**4.** Système de mesure de jeu et d'affleurement entre deux pièces en vis-à-vis selon la revendication 1, 2 ou 3, **caractérisé en ce qu'**il comprend la détermination, pour au moins un des profils, sur la partie du profil représentant l'une des deux pièces en vis-à-vis, d'un premier point de référence (I) où le rayon de courbure du profil prend une valeur de seuil prédéterminée ($R_s$).

**5.** Système de mesure de jeu et d'affleurement entre deux pièces en vis-à-vis selon la revendication 4, **caractérisé en ce que** la valeur de seuil prédéterminée ($R_s$) est choisie, en fonction des résultats d'une analyse statistique des pièces sur lesquelles la mesure sera effectuée, de manière à présenter une valeur suffisamment élevée pour qu'on puisse détecter ce changement de courbure mais suffisamment basse pour limiter le bruit de mesure à un niveau qui ne nuit pas à la répétabilité de la mesure.

**6.** Système de mesure de jeu et d'affleurement entre deux pièces en vis-à-vis selon la revendication 4 ou 5, **caractérisé en ce qu'**il comprend la détermination, à partir dudit profil, pour chacune des pièces en vis-à-vis d'une première ligne de référence ($D_I$, $D_I'$) comme suit:

a) on détermine sur la partie du profil représentant ladite pièce le premier point de référence (I) ;
b) on détermine un premier point de construction ($P_1$) représentant le point d'intersection de ladite partie du profil avec la circonférence d'un cercle de rayon $R_1$ dont le centre est le premier point de référence (I) ;
c) on détermine un deuxième point de construction ($P_2$) représentant le point d'intersection de ladite partie du profil avec la circonférence d'un cercle de rayon $R_2$ dont le centre est le premier point de construction ($P_1$) ; et
d) on désigne en tant que première ligne de référence ($D_I$) la droite passant par les deux points de construction ($P_1,P_2$).

**7.** Système de mesure de jeu et d'affleurement entre deux pièces en vis-à-vis selon la revendication 6, **caractérisé en ce que** la valeur brute d'affleurement (A*) est évaluée à partir dudit profil par calcul de l'écart entre les deux premières lignes de référence ($D_I,D_I'$) désignées respectivement vis-à-vis des deux pièces en vis-à-vis.

**8.** Système de mesure de jeu et d'affleurement entre deux pièces en vis-à-vis selon la revendication 6, ou 7, **caractérisé en ce que** la valeur brute de jeu (J*) est évaluée à partir d'un des profils par calcul de l'écart entre deux deuxièmes points de référence (K) désignés chacun par rapport à l'une, respective, des pièces en vis-à-vis, pour chacune des pièces le deuxième point de référence (K) étant déterminé comme suit:

a) on détermine sur la partie du profil représentant ladite pièce une ligne de référence décalée ($D_K$), qui est sensiblement parallèle à la première ligne de référence ($D_I$) désignée vis-à-vis de cette pièce, et qui est espacée de ladite première ligne de référence vers l'intérieur de la pièce selon une distance ($R_P$), et
b) on désigne en tant que deuxième point (K) de référence le point d'intersection du profil avec ladite ligne de référence décalée ($D_K$).

**9.** Système de mesure de jeu et d'affleurement entre deux pièces en vis-à-vis selon la revendication 8, **caractérisé en ce que** la distance($R_P$) est choisie de telle manière que le deuxième point de référence (K) corresponde au rayon de courbure le plus grand de la surface concernée.

**10.** Système de mesure de jeu et d'affleurement entre deux pièces en vis-à-vis selon la revendication 8 ou 9, **caractérisé en ce que**, dans le cas où le deuxième point de référence (K) établi sur la base dudit procédé correspond à une partie du profil pour laquelle les données d'image ne sont pas disponibles, la position du deuxième point de référence (K) est calculée, en effectuant une modélisation par un polynôme du degré n à choisir, à partir des données d'image qui sont disponibles.

11. Système de mesure de jeu et d'affleurement entre deux pièces en vis-à-vis selon la revendication 8, 9 ou 10, **caractérisé en ce que** la valeur brute de jeu (J*) est évaluée à partir d'un des profils, comme suit :

   a) on désigne, en tant que deuxième droite de référence vis-à-vis d'une première des pièces, une droite ($D_B$) passant par le deuxième point de référence (K) désigné pour cette première pièce, et perpendiculaire à la première droite de référence ($D_I$) de ladite première pièce ;
   b) on désigne, en tant que troisième droite de référence, vis-à-vis de l'autre pièce, une droite ($D_B'$) passant par le deuxième point de référence (K') désigné pour cette autre pièce, et perpendiculaire à la première droite de référence ($D_I$) désignée pour ladite première pièce ; et
   c) on calcule en tant que valeur brute de jeu (J*), la distance entre ces deuxième et troisième droites de référence ($D_B$, $D_B'$).

12. Système de mesure de jeu et d'affleurement entre deux pièces en vis-à-vis selon la revendication 8, 9, 10 ou 11, **caractérisé en ce que** la valeur brute d'affleurement (A*) est évaluée à partir d'un des profils, comme suit :

   a) on désigne, en tant que deuxième droite de référence vis-à-vis d'une première des pièces, une droite ($D_B$) passant par le deuxième point de référence (K) désigné pour cette première pièce, et perpendiculaire à la première droite de référence ($D_I$) de ladite première pièce ;
   b) on détermine le point (L) d'intersection de cette deuxième droite de référence ($D_B$) désignée pour la première pièce avec la première ligne de référence ($D_I$) désignée pour cette première pièce ; et
   c) on calcule en tant que valeur brute de l'affleurement (A*), la distance minimum entre ledit point d'intersection (L) et la première droite de référence ($D_I'$) désignée pour l'autre pièce en vis-à-vis.

13. Système de mesure de jeu et d'affleurement entre deux pièces en vis-à-vis selon l'une quelconque des revendications 4 à 12, **caractérisé en ce que** le calcul de correction de valeurs brutes de jeu et d'affleurement utilise, en tant que point de référence dont le changement de position est évalué, le premier point de référence (I) désigné vis-à-vis d'une des pièces en vis-à-vis.

14. Système de mesure de jeu et d'affleurement entre deux pièces en vis-à-vis selon l'une quelconque des revendications précédentes, **caractérisé en ce que** les deux plans lumineux sont générés à partir d'une source lumineuse monochromatique, ou bien de sources lumineuses monochromatiques, possédant une longueur d'onde λ et que la lumière reçue par la caméra est filtrée afin d'éliminer les longueurs d'onde éloignées de la longueur d'onde λ.

**Patentansprüche**

1. System zum Messen des Spiels und des Fluchtungsfehlers zwischen den Flächen von zwei einander gegenüberliegenden Bauteilen, das aufweist:

   - eine oder mehrere Lichtquellen (22), die zwei lamellare Lichtebenen auf die Bauteile projizieren, um zwei Überhelligkeitslinien zu erzeugen, die sich je quer zu den Rändern der beiden Bauteile erstrekken,
   - eine Kamera (23), die das Bild dieser beiden Überhelligkeitslinien auffängt, und
   - eine Datenverarbeitungseinrichtung (30), derart, dass:

   - das dreidimensionale Profil der Flächen entlang jeder Überhelligkeitslinie berechnet wird,
   - Bruttowerte des Spiels (J*) und des Fluchtungsfehlers (A*) zwischen den Flächen der beiden Bauteile ausgehend von mindestens einem dieser beiden Profile berechnet werden, und

   **dadurch gekennzeichnet, dass**:

   - die beiden projizierten lamellaren Ebenen parallel sind, und
   - die Bruttowerte des Spiels und/oder des Fluchtungsfehlers korrigiert werden, um mögliche Drehungen des Geräts zu kompensieren, indem eine Berechnung durchgeführt wird, die den Bruttowert, die Trennung ($\Delta x$) zwischen den beiden Lichtebenen und die Differenz zwischen der Position eines Bezugspunkts eines der beiden Profile und der Position des entsprechenden Bezugspunkts des anderen Profils verwendet.

2. System zum Messen des Spiels und des Fluchtungsfehlers zwischen zwei einander gegenüberliegenden Bauteilen nach Anspruch 1, **dadurch gekennzeichnet, dass** der Bruttowert des Fluchtungsfehlers A* gemäß der folgenden Gleichung korrigiert wird:

$$A = A^* \sqrt{\Delta x^2 / (\Delta x^2 + \Delta z^2)}$$

wobei A den korrigierten Wert des Fluchtungsfehlers, $\Delta x$ die Trennung zwischen den Lichtebenen und $\Delta z$ in der Projektionsrichtung (z) die Positionsdifferenz zwischen den entsprechenden Bezugspunkten der beiden Profile darstellt.

3. System zum Messen des Spiels und des Fluchtungsfehlers zwischen zwei einander gegenüberliegenden Bauteilen nach Anspruch 1 oder 2, **dadurch gekennzeichnet, dass** der Bruttowert J* des Spiels gemäß der folgenden Gleichung korrigiert wird:

$$J = J^* \sqrt{\Delta x^2 / (\Delta x^2 + \Delta y^2)}$$

wobei J den korrigierten Wert des Spiels, $\Delta x$ die Trennung zwischen den Lichtebenen und $\Delta y$ die Positionsdifferenz der entsprechenden Bezugspunkte der beiden Profile in der Richtung (y) orthogonal sowohl zur Projektionsrichtung (z) als auch zur Richtung (x) senkrecht zur Überhelligkeitsebene darstellt.

4. System zum Messen des Spiels und des Fluchtungsfehlers zwischen zwei einander gegenüberliegenden Bauteilen nach Anspruch 1, 2 oder 3, **dadurch gekennzeichnet, dass** es für mindestens eines der Profile in dem eines der beiden einander gegenüberliegenden Bauteile darstellenden Profilbereich die Bestimmung eines ersten Bezugspunkts (I) enthält, in dem der Krümmungsradius des Profils einen vorbestimmten Schwellwert ($R_s$) annimmt.

5. System zum Messen des Spiels und des Fluchtungsfehlers zwischen zwei einander gegenüberliegenden Bauteilen nach Anspruch 4, **dadurch gekennzeichnet, dass** der vorbestimmte Schwellwert ($R_s$) in Abhängigkeit von den Ergebnissen einer statistischen Analyse der Bauteile ausgewählt wird, an denen die Messung durchgeführt wird, damit ein Wert vorliegt, der ausreichend hoch ist, um diese Krümmungsänderung erfassen zu können, aber niedrig genug ist, um das Messrauschen auf einen Pegel zu begrenzen, der der Wiederholbarkeit der Messung nicht schadet.

6. System zum Messen des Spiels und des Fluchtungsfehlers zwischen zwei einander gegenüberliegenden Bauteilen nach Anspruch 4 oder 5, **dadurch gekennzeichnet, dass** es ausgehend von dem Profil für jedes der einander gegenüberliegenden Bauteile die folgende Bestimmung einer ersten Bezugslinie ($D_I$, $D_{I'}$) enthält:

a) in dem das Bauteil darstellenden Profilbereich wird der erste Bezugspunkt (I) festgelegt;
b) es wird ein erster Konstruktionspunkt ($P_I$) festgelegt, der den Schnittpunkt des Profilbereichs mit dem Umfang eines Kreises mit dem Radius $R_I$ darstellt, dessen Mitte der erste Bezugspunkt (I) ist;
c) es wird ein zweiter Konstruktionspunkt ($P_2$) festgelegt, der den Schnittpunkt des Profilbereichs mit dem Umfang eines Kreises mit dem Radius $R_2$ darstellt, dessen Mitte der erste Konstruktionspunkt ($P_1$) ist; und
d) als erste Bezugslinie ($D_1$) wird die Gerade bestimmt, die durch die beiden Konstruktionspunkte ($P_1$, $P_2$) verläuft.

7. System zum Messen des Spiels und des Fluchtungsfehlers zwischen zwei einander gegenüberliegenden Bauteilen nach Anspruch 6, **dadurch gekennzeichnet, dass** der Bruttowert des Fluchtungsfehlers (A *) ausgehend von dem Profil durch Berechnen des Abstands zwischeri den beiden ersten Bezugslinien ($D_I$, $D_{I'}$) bewertet wird, die je gegenüber den beiden einander gegenüberliegenden Bauteilen bestimmt werden.

8. System zum Messen des Spiels und des Fluchtungsfehlers zwischen zwei einander gegenüberliegenden Bauteilen nach Anspruch 6 oder 7, **dadurch gekennzeichnet, dass** der Bruttowert des Spiels (J*) ausgehend von einem der Profile durch Berechnen des Abstands zwischen zwei zweiten Bezugspunkten (K), die je in bezug auf eines der einander gegenüberliegenden Bauteile bestimmt werden, bewertet wird, wobei für jedes der Bauteile der zweite Bezugspunkt (K) wie folgt festgelegt wird:

a) in dem das Bauteil darstellenden Profilbereich wird eine verschobene Bezugslinie ($D_K$) festgelegt, die im wesentlichen parallel zur ersten Bezugslinie ($D_I$) liegt, die gegenüber diesem Bauteil bestimmt wurde, und die zur ersten Bezugslinie in Richtung zum Inneren des Bauteils einen Abstand ($R_P$) aufweist, und
b) als zweiter Bezugspunkt (K) wird der Schnittpunkt des Profils mit der verschobenen Bezugslinie ($D_K$) bestimmt.

9. System zum Messen des Spiels und des Fluchtungsfehlers zwischen zwei einander

- gegenüberliegenden Bauteilen nach Anspruch 8, **dadurch gekennzeichnet, dass** der Abstand ($R_P$) so gewählt wird, dass der zweite Bezugspunkt (K) dem größten Krümmungsradius der betroffenen Fläche entspricht.

**10.** System zum Messen des Spiels und des Fluchtungsfehlers zwischen zwei einander gegenüberliegenden Bauteilen nach Anspruch 8 oder 9, **dadurch gekennzeichnet, dass** in dem Fall, in dem der zweite Bezugspunkt (K), der auf der Basis des Verfahrens erstellt wurde, einem Profilbereich entspricht, für den die Bilddaten nicht verfügbar sind, die Position des zweiten Bezugspunkts (K) berechnet wird, indem ausgehend von den verfügbaren Bilddaten ein Modell durch ein Polynom des zu wählenden Grads n gebildet wird.

**11.** System zum Messen des Spiels und des Fluchtungsfehlers zwischen zwei einander gegenüberliegenden Bauteilen nach Anspruch 8, 9 oder 10, **dadurch gekennzeichnet, dass** der Bruttowert des Spiels (J*) ausgehend von einem der Profile folgendermaßen bewertet wird:

a) als zweite Bezugsgerade gegenüber einem ersten der Bauteile wird eine Gerade ($D_B$) bestimmt, die durch den zweiten Bezugspunkt (K), der für dieses erste Bauteil bestimmt wurde, und senkrecht zur ersten Bezugsgeraden ($D_I$) des ersten Bauteils verläuft;
b) als dritte Bezugsgerade gegenüber dem anderen Bauteil wird eine Gerade ($D_{B'}$) bestimmt, die durch den zweiten Bezugspunkt (K'), der für dieses andere Bauteil bestimmt wurde, und senkrecht zur ersten Bezugsgeraden ($D_I$) verläuft, die für das erste Bauteil bestimmt wurde; und
c) als Bruttowert (J*) des Spiels wird der Abstand zwischen der ersten und der dritten Bezugsgeraden ($D_B$, $D_{B'}$) berechnet.

**12.** System zum Messen des Spiels und des Fluchtungsfehlers zwischen zwei einander gegenüberliegenden Bauteilen nach Anspruch 8, 9, 10 oder 11, **dadurch gekennzeichnet, dass** der Bruttowert des Fluchtungsfehlers (A*) ausgehend von einem der Profile wie folgt bewertet wird:

a) als zweite Bezugsgerade gegenüber einem ersten der Bauteile bestimmt man eine Gerade ($D_B$), die durch den zweiten Bezugspunkt (K), der für dieses erste Bauteil bezeichnet ist, und senkrecht zur ersten Bezugsgeraden ($D_I$) des ersten Bauteils verläuft;
b) man bestimmt den Schnittpunkt (L) dieser zweiten Bezugsgeraden ($D_B$), die für das erste Bauteil bestimmt wurde, mit der ersten Bezugslinie ($D_I$), die für dieses erste Bauteil bestimmt wurde, und
c) man berechnet als Bruttowert des Fluchtungsfehlers (A*) den Mindestabstand zwischen dem Schnittpunkt (L) und der ersten Bezugsgeraden ($D_{I'}$), die für das andere, gegenüberliegende Bauteil bestimmt wurde.

**13.** System zum Messen des Spiels und des Fluchtungsfehlers zwischen zwei einander gegenüberliegenden Bauteilen nach einem der Ansprüche 4 bis 12, **dadurch gekennzeichnet, dass** die Korrekturrechnung der Bruttowerte des Spiels und des Fluchtungsfehlers als Bezugspunkt, dessen Positionsänderung bewertet wird, den ersten Bezugspunkt (I) verwendet, der gegenüber einem der einander gegenüberliegenden Bauteile bestimmt wurde.

**14.** System zum Messen des Spiels und des Fluchtungsfehlers zwischen zwei einander gegenüberliegenden Bauteilen nach einem der vorhergehenden Ansprüche, **dadurch gekennzeichnet, dass** die beiden Lichtebenen ausgehend von einer monochromatischen Lichtquelle, oder auch monochromatischen Lichtquellen, erzeugt werden, die eine Wellenlänge λ aufweisen, und dass das von der Kamera empfangene Licht gefiltert wird, um die Wellenlängen zu eliminieren, die von der Wellenlänge λ entfernt sind.

**Claims**

**1.** System for measuring gap and mismatch between the surfaces of two opposing parts, comprising:

- one or several light sources (22) projecting two parallel planar sheets of light onto the parts so as to create two brightness lines each extending transversely to the edges of the two parts,
- a camera (23) detecting the image of these two brightness lines,
- a data processing unit (30) in which:

- the profile of the surfaces in 3 dimensions is calculated along each brightness line,
- raw values of gap (J*) and mismatch (A*) between the surfaces of the two parts are calculated from at least one of these two profiles, and

**characterized in that**:

- both projected planar sheets are parallel, and
- the raw values of gap and/or mismatch are corrected, so as to compensate possible rotations of the apparatus, by performing a calculation using said raw value, the separation (Δx) between the two light planes, and the difference between the position of a reference point on one of the two profiles and the position of the corresponding reference point on the other of the profiles.

**2.** System according to claim 1, for measuring gap and mismatch between two opposing parts, **characterized in that** the raw value of mismatch A* is corrected according to the following equation:

$$A = A^* \sqrt{\Delta x^2 / (\Delta x^2 + \Delta z^2)}$$

where A represents the corrected value of mismatch, $\Delta x$ represents the separation between the light planes, and $\Delta z$ represents the position difference of the corresponding reference points of the two profiles in the direction of projection (z).

**3.** System according to claim 1 or 2, for measuring gap and mismatch between two opposing parts, **characterized in that** the raw value for gap J* is corrected according to the following equation:

$$J = J^* \sqrt{\Delta x^2 / (\Delta x^2 + \Delta y^2)}$$

where J represents the corrected value of gap, $\Delta x$ represents the separation between the light planes, and $\Delta y$ represents the position difference of the corresponding reference points of the two profiles in the direction (y) orthogonal both to the direction of projection (z) and to the direction (x) perpendicular to the light plane.

**4.** System according to claim 1, 2 or 3, for measuring gap and mismatch between two opposing parts, and comprising the determination, for at least one of the profiles, on the portion thereof representing one of the two opposing parts, of a first reference point (I) where the radius of curvature of the profile takes a predetermined threshold value ($R_s$).

**5.** System according to claim 4, for measuring gap and mismatch between two opposing parts, **characterized in that** the predetermined threshold value ($R_s$) is chosen, dependent upon the results of a statistical analysis of the parts upon which the measurement will be performed, so as to have a value sufficiently great that this change in curvature can be detected but sufficiently low that the measurement noise is restricted to a level which does not harm the repeatability of the measurement.

**6.** System according to claim 4 or 5, for measuring gap and mismatch between two opposing parts, and **characterized in that** it comprises the determination from said profile, of a first reference line ($D_I$, $D_I'$) for each of the opposing parts as follows:

a) determining, on that portion of the profile representing said part, the first reference point (I);
b) determining a first point of geometrical construction ($P_1$) representing the point of intersection of said portion of the profile with the circumference of a circle of radius $R_1$ centered on the first reference point (I);
c) determining a second point of geometrical construction ($P_2$) representing the point of intersection of said portion of the profile with the circumference of a circle of radius $R_2$ centered on the first point of geometrical construction (P1); and
d) designating as the first reference line ($D_1$) the straight line passing through the two points of geometrical construction ($P_1$,$P_2$).

**7.** System according to claim 6, for measuring gap and mismatch between two opposing parts, **characterized in that** the raw value of mismatch (A*) is evaluated from said profile by calculating the spacing between the two first reference lines ($D_I$,$D_1'$) designated for the two opposing parts, respectively.

**8.** System according to claim 6 or 7, for measuring gap and mismatch between two opposing parts, **characterized in that** the raw value of gap (J*) is evaluated from one of said profiles by calculating the spacing between two second reference points (K) each designated for a respective one of the opposing parts, for each of the parts the second reference point (K) being determined as follows:

a) determining on the portion of the profile representing said part an offset reference line ($D_K$), which is substantially parallel to the first reference line ($D_I$) designated for this part, and which is spaced from said first reference line towards the interior of the part by a distance ($R_P$), and
b) designating, as the second reference point (K), the point of intersection of the profile with said offset reference line (DK).

**9.** System according to claim 8, for measuring gap and mismatch between two opposing parts, wherein the distance $R_P$ is chosen such that the second reference point (K) corresponds to the greatest radius of curvature of the surface in question.

**10.** System according to claim 8 or 9, for measuring gap and mismatch between two opposing parts, **characterized in that**, in the case where the second reference point (K) established on the basis of said method corresponds to a portion of the profile for which image data is not available, the position of the second reference point (K) is calculated, by performing modelling using a selected $n^{th}$ order polynomial, based on image data which is available.

**11.** System according to claim 8, 9 or 10 for measuring gap and mismatch between two opposing parts, **characterized in that** the raw value of gap (J*) is evaluated from one of the profiles as follows:

a) designating, as a second reference line for a first one of the parts, a straight line ($D_B$) passing through the second reference point (K) designated for this first part, and perpendicular to the first reference line ($D_I$) of said first part;
b) designating, as a third reference line, for the other of the parts, a straight line ($D_B'$) passing through the second reference point (K) designated for this other part, and perpendicular to the first reference line ($D_I$) designated for said first part; and
c) calculating as the raw value of gap (J*), the distance between these second and third reference lines ($D_B$, $D_B'$).

12. System according to claim 8, 9, 10 or 11, for measuring gap and mismatch between two opposing parts, **characterized in that** the raw value of mismatch is evaluated from one of the profiles as follows:

a) designating, as a second reference line for a first one of the parts, a straight line ($D_B$) passing through the second reference point (K) designated for this first part, and perpendicular to the first reference line ($D_I$) of said first part;
b) determining the point of intersection (L) of this second reference line ($D_B$) designated for the first part with the first reference line ($D_I$) designated for this first part; and
c) calculating, as the raw value of mismatch (A*), the minimum distance between said point of intersection (L) and the first reference line ($D^{I'}$) designated for the other of the opposing parts.

13. System according to any of claims 4 to 12, for measuring gap and mismatch between two opposing parts, **characterized in that** the calculation correcting the raw values of gap and mismatch uses, as the reference point whose change of position is evaluated, the first reference point (I) designated for one of the opposing parts.

14. System according to any one of the previous claims, for measuring gap and mismatch between two opposing parts, **characterized in that** the two light planes are produced from a monochromatic light sources, or sources, possessing a wavelength $\lambda$ and the light received by the camera is filtered so as to eliminate the wavelengths distant from the wavelength $\lambda$.

jeu

affleurement

pièce 1

pièce 2

# FIG.1

P

1

2

image 2D

Z

Z'

plan épipolaire

P

caméra 7

base

diode laser 5

# FIG.2

# FIG.3

$J_T$ : jeu théorique
perpendiculaire
à l'axe du jeu

$J^*$ : jeu mesuré

pièce 1

Lignes de surbrillance

pièce 2

# FIG.5

lignes de
surbrillance

pièce 2

pièce 1

**FIG.4**

FIG.6a

FIG.6b

FIG.6c

FIG.7a

FIG.7b

FIG.7c

FIG.8a

FIG.8b

FIG.9

FIG.10

$D_I$

surface sertie

I    d

surface gauche

# FIG.11

droite ajustée $D_M$

distance cordale

points du profil

# FIG.12